Europäisches Patentamt

**European Patent Office**

Office européen des brevets

(19)

(11) Veröffentlichungsnummer: **0 045 508**
A1

(12) ## EUROPÄISCHE PATENTANMELDUNG

(21) Anmeldenummer: **81106070.6**

(22) Anmeldetag: **03.08.81**

(51) Int. Cl.³: **G 01 S 13/52**

(30) Priorität: **04.08.80 DE 3029518**

(43) Veröffentlichungstag der Anmeldung:
**10.02.82 Patentblatt 82/6**

(84) Benannte Vertragsstaaten:
**BE CH FR GB IT LI NL**

(71) Anmelder: **SIEMENS AKTIENGESELLSCHAFT Berlin und München**
**Postfach 22 02 61**
**D-8000 München 22(DE)**

(72) Erfinder: **Müller, Bernd, Dr. Ing.**
**Lindenberg 84**
**D-8134 Pöcking(DE)**

(54) **Puls-Doppler-Radar mit einer Schaltungsanordnung zur kohärenten Integration.**

(57) Die Festzeichenunterdrückungsschaltung (MTI) in einem Puls-Doppler-Radar mit einer Anordnung zur kohärenten Integration ist Ursache für eine teilweise Korrelation der Rauschspannungen. Die Rauschspannungen der Ausgangsimpulse der Festzeichenunterdrückungsschaltung sind daher teilweise korreliert, wodurch ein Verlust im Integrationsgewinn des Signal/Rauschleistungsverhältnisses bei der nachfolgenden Integration entsteht. Um diesen Verlust zu vermeiden, wird zwischen der Festzeichenunterdrückungsschaltung und der kohärenten Integration eine Wichtung der Signalimpulse in einem Wichtungsmultiplizierer durchgeführt.

FIG 1

EP 0 045 508 A1

SIEMENS AKTIENGESELLSCHAFT          Unser Zeichen
Berlin und München                 VPA
                                    80 P 6 6 4 5 E


Puls-Doppler-Radar mit einer Schaltungsanordnung zur kohärenten Integration

Die Erfindung bezieht sich auf ein Puls-Doppler-Radar, dessen Echosignale in einem Phasendetektor in Signalkomponenten (I- und Q-Kanal) zerlegt werden, mit einer Festzeichenunterdrückungschaltung (MTI) und mit einer nachgeschalteten kohärenten Integrationsschaltung zur Verbesserung des Signal/Rauschleistungsverhältnisses.

In der Radarsignalverarbeitung werden zur Verbesserung der Zielentdeckung, d.h. zur Verbesserung des Signal/ Rauschleistungsverhältnisses mehrere Signalimpulse aufintegriert. Der dabei erzielbare Gewinn im Signal/Rauschleistungsverhältnis wird jedoch reduziert, wenn die Pulse vor der Integration eine Schaltung zur Festzeichen- bzw. Clutterunterdrückung durchlaufen haben: Während die Rauschspannung von Puls zu Puls am Eingang der Festzeichenunterdrückungschaltung (MTI) als unkorreliert, d.h. als unabhängig voneinander betrachtet werden kann, trifft diese Annahme für die Ausgangspulse der Festzeichenunterdrückungschaltung nicht mehr zu. Als Folge dieser teilweisen Korrelation der Rauschspannungen der Ausgangsimpulse ist die erzielbare S/N-Verbesserung durch die nachfolgende kohärente Integration reduziert.

Es sind bereits mehrere Verfahren zur Berechnung des Signal/Rauschleistungsverhältnisses bei einer Signalverarbeitung durch eine Festzeichenunterdrückungschaltung und nachgeschalteter kohärenter Integration der Signalimpulse, z.B. aus IEEE International Radar Conference 1975, Seiten 117-119, bekannt.

Ha 1 Bsl / 31.07.1980

Der Erfindung liegt die Aufgabe zugrunde, den infolge der Korrelation des Rauschens entstehenden Verlust im Integrationsgewinn des Signal/Rauschleistungsverhältnisses wenigstens teilweise aufzuheben und dadurch die Entdeckungswahrscheinlichkeit zu verbessern.

Gemäß der Erfindung wird diese Aufgabe dadurch gelöst, daß am Ausgang der Festzeichenunterdrückungschaltung (MTI) vor der nachfolgenden kohärenten Integration eine individuelle Wichtung der Signalkomponenten (I',Q') der einzelnen Echosignale erfolgt.

Gemäß einer vorteilhaften Weiterbildung der Erfindung erfolgt die Integration der Signalkomponenten in einer Doppler-Filterbank, die in einer besonderen Ausführung L-stufig ausgebildet ist, wobei L vorzugsweise die Anzahl der am Ausgang der Festzeichenunterdrückungschaltung anstehenden Impulse angibt.

Eine andere Möglichkeit der kohärenten Integration der gewichteten Signalkomponenten besteht in der Anwendung einer Fast-Fourier-Transformation.

Die Pulswichtung der Amplituden der Signalkomponenten am Ausgang der Festzeichenunterdrückungschaltung erfolgt vor der Integration durch Multiplikation der Pulsamplituden mit Wichtungsfaktoren $D_K$, z.B. nach einer $\cos^n$-Wichtung mit Podest. Darin bedeutet n eine ganze Zahl. Der Wichtungsfaktor für den jeweiligen Signalimpuls k ergibt sich aus der Gleichung

$D_k = W+(1-W) \cdot \cos^n (\pi\frac{k}{L} - \frac{L+1}{2L})$. In dieser Gleichung bedeuten n eine ganze Zahl, L die Anzahl der zu integrierenden Impulse, k die Nummer des Einzelimpulses (1...L) und W einen Wichtungskoeffizienten der einen Wert zwischen 0 und 1 (Podest) annehmen kann.

Durch die Wichtung der Pulse vor der kohärenten Integration wird gegenüber der Integration ungewichteter Impulse eine Verbesserung des mittleren Signal/Rauschleistungs- verhältnisses und damit der Entdeckungswahrscheinlich- keit erzielt.

Eine Aufeinanderfolge von Festzeichenunterdrückung und gewichteter kohärenter Pulsintegration, ist auch dann sinnvoll, wenn z.B. neben Bodenclutter ein zweites Clutterspektrum, das durch Regen oder Chaff entstehen kann, mit einer anderen Doppler-Frequenzlage oder mit einer variierenden mittleren Dopplerfrequenz zu unterdrücken ist. Die durch die erfindungsgemäße Lösung erreichte Verbesserung ist dann darin begründet, daß durch die Wichtung eine Verringerung der Nebenmaxima der Filterübertragungsfunktion erreicht wird.

Die Erfindung und weitere Einzelheiten der Erfindung werden anhand der Figuren 1 bis 4 näher erläutert

Es zeigen

Fig. 1   ein Prinzipschaltbild der erfindungsgemäßen Schaltung (Signalverarbeitungsschaltung)

Fig. 2   ein Blockschaltbild des ersten Teils der Signalverarbeitungsschaltung mit einem Phasendetektor, einem Analog-Digitalwandler, einer Festzeichenunterdrückungschaltung und der Wichtungsschaltung

Fig. 3   eine Doppler-Filterbank mit einer Kaskaden-Vergleichsschaltung und Ausgangsschaltung (CAR)

Fig. 4   ein Prinzipschaltbild einer einzelnen Vergleichsschaltung.

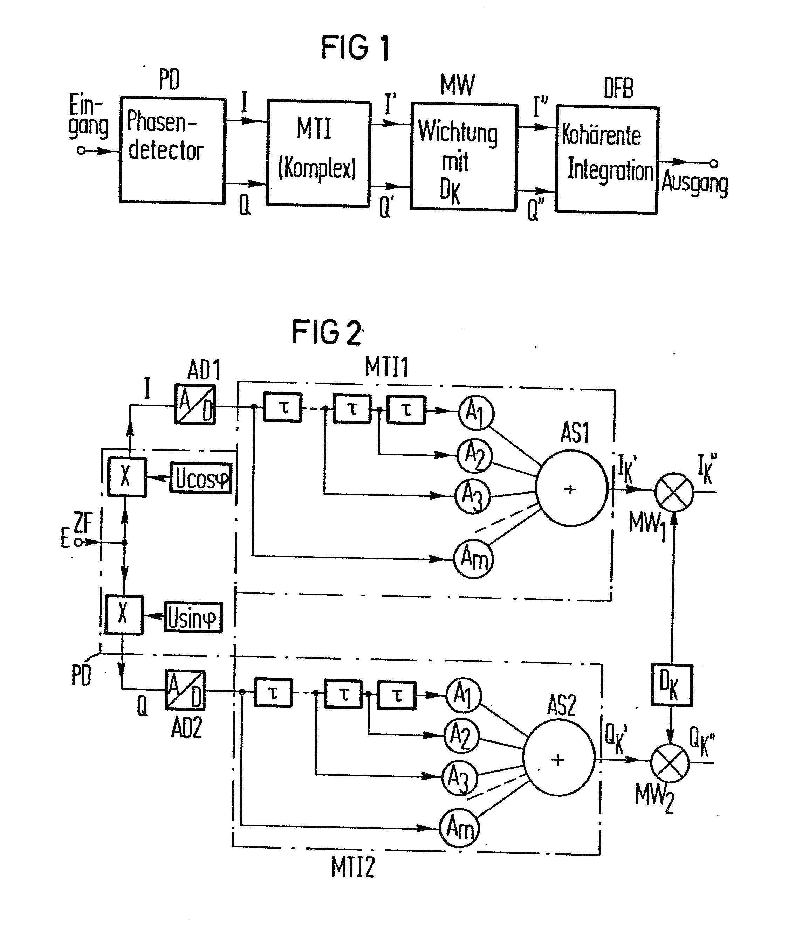

In Fig. 1 ist die Einfügung einer Wichtung der Ausgangssignale der Festzeichenunterdrückungschaltung vor der Integration in einer Doppler-Filterbank angedeutet.

0045508

Es sind hier aufeinanderfolgend ein Phasendetektor PD, dem eingangsseitig Echosignale zugeführt werden, eine Festzeichenunterdrückungschaltung MTI und ein Wichtungsmultiplizierer WM vor einer kohärenten Integrationsschaltung DFB dargestellt.

In Fig. 2 wird am Eingang E die im allgemeinen komplexe Signalspannung (Echosignale) in der Zwischenfrequenzlage (ZF) dem Phasendetektor PD zugeführt. Bei dem Phasendetektor handelt es sich um eine Schaltung bekannter Art, der ausgangsseitig in einem I- und einem Q-Kanal die beiden entsprechenden Signalkomponenten liefert. Die Signalkomponenten gelangen über je einen Analog-Digitalwandler AD1 und AD2 an je eine ein- oder mehrstufige Festzeichenunterdrückungschaltung MTI1, MTI2. Im Ausführungsbeispiel ist eine als B-facher Delay-line canceller ausgebildete Festzeichenunterdrückungschaltung dargestellt. Die Verzögerungsleitungen sind mit $\tau$ bezeichnet. Die Einzelimpulse werden mit $A_m$ (m=1,2...B+1) gewichtet. Durch die Art der Signal-Puls-Verarbeitung entsteht in der Festzeichenunterdrückungschaltung eine teilweise Korrelation des Rauschens im Ausgangssignal. Während die Rauschspannung von Puls zu Puls am Eingang der Festzeichenunterdrückungschaltung als unkorreliert, d.h. als unabhängig voneinander betrachtet werden kann, trifft diese Annahme für die Ausgangsimpulse nicht mehr zu. Wenn davon ausgegangen wird, daß die Pulszahl M am Eingang der Festzeichenunterdrückungschaltung um mehr als einen Puls größer ist als die Anzahl B der Verzögerungsglieder, dann ergibt sich die Anzahl der Pulse L am Ausgang der Festzeichenunterdrückungschaltung aus L =M-B. Als Folge der Korrelation des Rauschens ist durch eine nachfolgende Integration der L Pulse ein optimaler Gewinn an Signal/Rauschleitungsverhältnis nicht mehr erzielbar. Durch die Einführung einer geeigneten Wichtung der einzelnen Pulse kann dieser Nachteil weitgehend vermieden werden. Die Amplituden der Pulse beider Signalkanäle werden daher in je einem Multiplizierer MW1,MW2 mit einem reellen Wichtungsfaktor multipliziert.

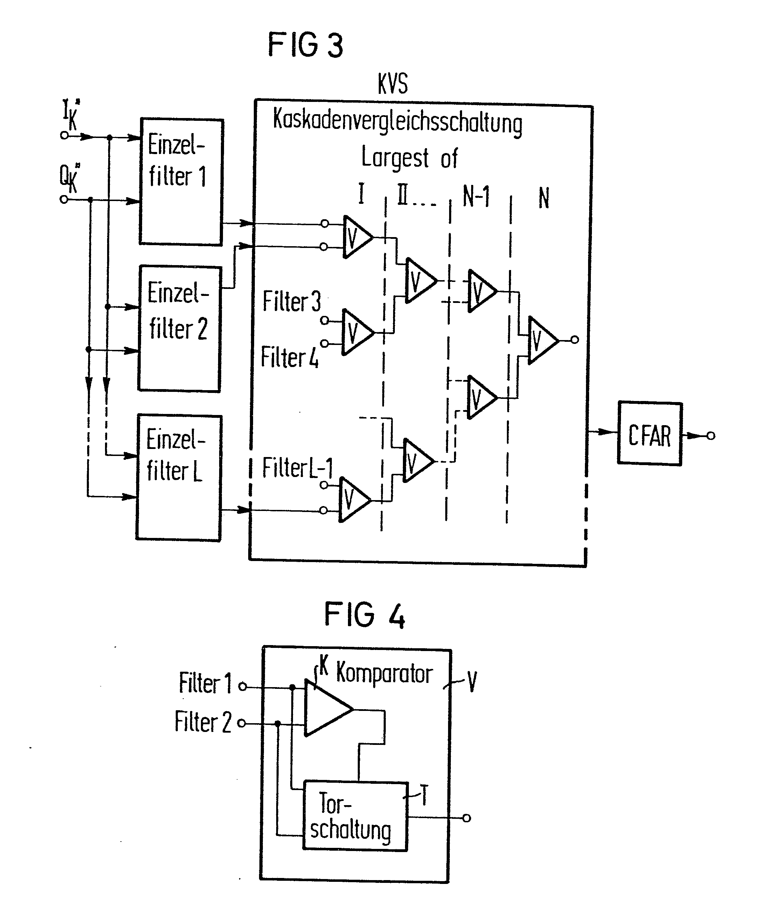

Die gewichteten Impulse werden anschließend in einer Doppler-Filterbank DFB (Fig. 3) einer kohärenten Integration unterzogen. Die Eingänge der Doppler-Filterbank DFB sind mit dem Ausgang $I''_K$ und $Q''_k$ beider Wichtungsmultiplizierer MW1 und MW2 verbunden. Als Filterbank kann z.B. eine Schaltung mit Verzögerungsleitungen verwendet werden, wie sie in der Zeitschrift NTZ, Jahrgang 29 (1976), Seiten 663 bis 666 beschrieben ist. Wie in Fig. 3 dargestellt, besteht die Filterbank aus einer Anzahl L Einzelfiltern, deren Eingänge parallel geschaltet sind. An die Ausgänge der Einzelfilter 1 bis L ist eine Kaskaden-Vergleichsschaltung KVS (Largest of) angeschlossen, in der in mehreren Ebenen 1 bis N durch Signalvergleiche das größte Signal ausgewählt wird. Jede Vergleichsschaltung V der Kaskade besteht aus einem Komparator K, an dessen Eingängen zwei zu vergleichende Signale zugeführt werden und aus einer Torschaltung T, deren Ausgangssignal in der nachfolgenden Ebene der Vergleichsschaltung mit einem weiteren Ausgangssignal einer anderen Torschaltung verglichen wird. Die Eingänge der Komparatoren der ersten Ebene I sind mit jeweils zwei Filterausgängen z.B. Einzelfilter 1 und Einzelfilter 2 der Doppler-Filterbank DFB verbunden. Der Ausgang der Vergleichsschaltung V der n-ten Ebene liefert die in der Kaskaden-Vergleichsschaltung KVS durch "Largest of"--Auswertung ausgewählte maximale Einzelfilter-Ausgangsspannung, die z.B. einer CFAR-Schaltung zugeführt wird.

In der Fig. 4 ist ein Prinzipschaltbild einer aus Komparator K und Torschaltung T bestehenden Vergleichsschaltung V der ersten Ebene 1 dargestellt. Alle Vergleichsschaltungen V sind unter sich gleich ausgebildet.

Die Anwendung der Wichtung der Ausgangssignale der Festzeichenunterdrückungschaltung MTI ist nicht auf eine digitale Verarbeitung gemäß dem beschriebenen Ausführungsbeispiel beschränkt. Sie kann bei analoger Signalverarbeitung mit dem gleichen Vorteil erfolgen.

5 Patentansprüche

4 Figuren

0045508

80 P 6645 E

Patentansprüche

1. Puls-Doppler-Radar, dessen komplexe Echosignale in einem Phasendetektor in Signalkomponenten (I- und Q-Kanal) zerlegt werden, mit einer Festzeichenunterdrückungschaltung (MTI) und mit einer kohärenten Integrationsschaltung zur Verbesserung des Signal/Rauschverhältnisses, **d a d u r c h   g e k e n n z e i c h n e t** , daß am Ausgang der Festzeichenunterdrückungschaltung (MTI) vor der nachfolgenden kohärenten Integration eine individuelle Wichtung der Signalkomponenten (I,Q) der einzelnen Echosignale erfolgt.

2. Puls-Doppler-Radar nach Anspruch 1, **d a d u r c h   g e k e n n z e i c h n e t** , daß die kohärente Integration der I- und Q-Signalkomponenten in einer Doppler-Filterbank (DFB) erfolgt.

3. Puls-Doppler-Radar nach Anspruch 1, **d a d u r c h   g e k e n n z e i c h n e t** , daß die kohärente Integration durch Anwendung einer Fast-Fourier-Transformation erfolgt.

4. Puls-Doppler-Radar nach Anspruch 1 oder 2, **d a - d u r c h   g e k e n n z e i c h n e t** , daß die Doppler-Filterbank (DFB) L-stufig ausgebildet ist, wobei L vorzugsweise die Anzahl der Signalpulse am Ausgang der Festzeichenunterdrückungschaltung (MTI) ist.

5. Puls-Doppler-Radar nach einem der Ansprüche 1 bis 4, **d a d u r c h   g e k e n n z e i c h n e t** , daß die Wichtung der Echosignale in einer Multiplizierstufe (MW) durch Multiplikation mit Wichtungsfaktoren ($D_k$) erfolgt, die nach einem $\cos^n$-Gesetz nach der Beziehung

$$D_k = W + (1-W) \cos^n\left( \pi \frac{k}{L} - \frac{L+1}{2L} \right)$$

gebildet werden, wobei n für eine ganze Zahl steht und
L die Anzahl der zu integrierenden Impulse, k die Nummer
des Einzelimpulses (1....L) und W ein Wichtungskoeffizienten (0...1) ist.

FIG 1

FIG 2

## FIG 3

KVS
Kaskadenvergleichsschaltung
Largest of

## FIG 4

## Europäisches Patentamt

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US − A − 3 975 734 (R.W. PAYNE)<br>* Spalte 8, Zeile 40 und ff. *<br>−− | 1 |
| | US − A − 3 877 011 (D.E. HOLBERG et al.)<br>* Spalte 13, Zeilen 4 bis 8; Fig. 5 *<br>−− | 1 |
| | US − A − 4 053 885 (Y. TOMITA et al.)<br>* Fig. 2, Position 133 *<br>−− | 3 |
| A | US − A − 4 137 533 (G.T. BRIECHLE et al.)<br>* Fig. 1 bis 8 *<br>−− | |
| A | US − A − 4 101 889 (N.T. EVANS)<br>* Spalte 5, Zeile 1 und ff.; Fig. 2 *<br>−− | |
| A | US − A − 3 825 930 (E. DAVIES)<br>* Spalte 4, Zeile 46 und ff.; Fig. 3 *<br>−− | |
| A | US − A − 3 634 859 (J.E. WOLF)<br>* Fig. 2 *<br>−− | |
| A | DE − B2 − 2 548 229 (SIEMENS)<br>* Fig. 1 *<br>−−−− | |

**KLASSIFIKATION DER ANMELDUNG (Int. Cl.³)**

G 01 S 13/52

**RECHERCHIERTE SACHGEBIETE (Int. Cl.³)**

G 01 S 7/28
G 01 S 7/30
G 01 S 13/52

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 07−10−1981 | BREUSING |

EPA form 1503.1 06.78